# EUROPÄISCHE PATENTSCHRIFT

(11) **EP 3 253 527 B1**
(45) Veröffentlichungstag und Bekanntmachung des Hinweises auf die Patenterteilung: **30.12.2020**
(21) Anmeldenummer: 16705053.3
(22) Anmeldetag: 03.02.2016
(51) Int. Cl.: B23K 20/12, B21J 15/02, B23K 35/02

(54) **BAUTEILVERBINDUNG MIT EINER REIBSCHWEISSVERBINDUNG**
WORKPIECE ARRANGEMENT WITH A FRICTION-WELDED CONNECTION
CONNECTION PAR SOUDURE PAR FRICTION-MALAXAGE

(30) Priorität: 05.02.2015 DE 102015202074
(43) Veröffentlichungstag der Anmeldung: 13.12.2017
(73) Patentinhaber: EJOT GmbH & Co. KG, 57319 Bad Berleburg (DE)
(72) Erfinder: WERKMEISTER, Marco, 99894 Leinatal (DE); MAIWALD, Mario, 99831 Creuzburg (DE); DUBIEL, Gerhard, 99897 Tambach-Dietharz (DE); SPINDLER, Daniel, 99897 Tambach - Dietharz (DE); MIELISCH, Marco, 99099 Erfurt (DE)
(74) Vertreter: Puschmann Borchert Kaiser Klettner Patentanwälte Partnerschaft mbB
(86) Internationale Anmeldenummer: PCT/EP2016/052290
(87) Internationale Veröffentlichungsnummer: WO 2016/124647

(56) Entgegenhaltungen:
- CN-A- 101 468 421
- DE-A1-102005 006 253
- DE-A1-102006 028 529
- DE-A1-102008 028 687

## Beschreibung

Die Erfindung betrifft eine Bauteilverbindung zwischen zwei aufeinander liegenden Bauteilen gemäß dem Oberbegriff des Anspruches 1.

Grundlegend sind Bauteilverbindungen bekannt, bei der zwei Bauteillagen miteinander verbunden sind, wobei ein Verbindungselement stirnseitig mit der Basislage durch Reibschweißen stoffschlüssig verbunden ist. Dies betrifft die US 3,477,115, die DE 10 2008 028 687 A1, sowie die DE 196 20 814 A1.

Aus der EP 2 289 659 A1 ist ein Reibschweißelement bekannt, das einen Kopf und einen Schaft aufweist, wobei in den Kopf ein Antrieb eingebracht ist. Der Kopf weist eine Planfläche auf, die zur Übertragung der Axialkraft geeignet ist. Der Kopf weist an seiner Unterseite ferner eine Ausnehmung auf, in welche beim Reibschweißvorgang erweichtes Material, insbesondere der Decklage, aufgenommen werden kann. Solch ein Materialaufnahmebereich am Kopf des Verbindungselements ist auch aus der DE 10 2009 006 775 A1 bekannt.
Das Verbindungselement geht mit seinem Schaft dabei eine Reibschweißverbindung mit der unteren Basislage des Bauteilverbundes ein. Durch den Überstand des Kopfes wird eine formschlüssige Verbindung zwischen Basis- und Decklage hergestellt. Auf diese Weise sind die Basislage und die Decklage über das Verbindungselement fest miteinander verbunden.

Zur Herstellung der Reibschweißverbindung ist ein Setzwerkzeug vorgesehen, welches einen Niederhalter und ein Antriebswerkzeug umfasst. Der Niederhalter drückt die zu verbindenden Bauteillagen aufeinander, wobei das Antriebswerkzeug das Verbindungselement unter Druck und Rotation in den Bauteilverbund eintreibt.

Diese Gestaltung hat den Nachteil, dass eine große Aufbauhöhe bei geringem Durchmesser vorliegen muss.

Es ist Aufgabe der Erfindung, eine Bauteilverbindung mit einem Verbindungselement anzugeben, die eine Bauteilverbindung ermöglicht, die insbesondere bei dünnen Blechen nur eine geringe Aufbauhöhe bei geringem Kopfdurchmesser besitzt.

Die Erfindung betrifft eine Bauteilverbindung gemäß Anspruch 1. Die Bauteilverbindung umfasst eine Basislage und wenigstens eine Decklage und ein zuvor beschriebenes Verbindungselement. Das Verbindungselement weist wenigstens einen Kopf und einen Schaft auf, wobei der Schaft an seiner Stirnseite mit der Basislage verschweißt ist. Somit geht das Verbindungselement mit seinem Schaft eine stoffschlüssige Verbindung mit der Basislage ein, wobei der Kopf die Decklage formschlüssig fixiert.

Erfindungsgemäß ist vorgesehen, dass das seitlich (radial nach außen) über den Kopf hinaustretende Material den Kopf seitlich wenigstens teilweise umschließt. Die Kopfoberflläche liegt dabei über dem Niveau der Decklagenoberfläche.

Erfindungsgemäß umfasst die Bauteilverbindung ein Verbindungselement, das derart ausgestaltet ist, dass sich eine kontinuierliche Durchmesserzunahme beginnend am zylindrischen Schaft bis zur Kopfunterseite ergibt. Die Kopfunterseite ist definiert durch das Niveau an der Kopfunterseite, welches den größten Abstand zum Schaftende aufweist.

Erfindungsgemäß ist der Abstand A vom Anstiegsniveau zum Niveau der Kopfunterseite kleiner als die Hälfte und größer als ein Vierte! der Differenz von Außendurchmesser und Schaftdurchmesser, nämlich: $( {D}_{A} - {D}_{S} / 4 < A < \left({D}_{A}-{D}_{S}\right) / 2$

Dies hat zur Folge, dass beim Eindringen des Verbindungselementes erweichtes Material der Decklage an der im Durchmesser zunehmenden Erweiterung abgeführt wird. Dennoch bleibt ein ausreichender Abstand zwischen dem als Schweißwulst aufsteigendem Material des Verbindungselements und dem Kopfniveau erhalten, sodass eine ausreichende Auszugsfestigkeit gewährleistet ist.

Der Schaftdurchmesser ist insbesondere der Durchmesser des Verbindungselements am Anstiegsniveau.

Zusätzliches erweichtes Material, das nicht zur Herstellung der Verbindung notwendig ist, wird seitlich (radial nach außen) vom Kopf herausgedrängt. Dadurch kann eine geringe Aufbauhöhe erreicht werden.

In einer vorteilhaften Weiterbildung der Erfindung beginnt die Steigung am Anstiegsniveau, die einen Winkel von weniger als 80°, insbesondere einem Winkel von weniger als 70°, mit der Normalen zur Achse des Verbindungselementes einschließt.

Dadurch wird das Verdrängungsverhalten des erweichten Materials der Decklage radial nach außen gesteuert.

Gemäß einer weiteren Ausgestaltung kann das Verbindungselement einen ersten Schaftabschnitt aufweisen, der zylindrisch ist.

Diese Ausgestaltung ist besonders günstig herstellbar.

In einer weiteren bevorzugten Ausgestaltung kann vorgesehen sein, dass die Höhe der Antriebsausnehmung kleiner als 30 % der radialen Ausdehnung der Antriebsausnehmung ist.

Dies hat zur Folge, dass der Kopf selbst mit geringer axialer Ausdehnung ausgestaltet werden kann, wodurch die Aufbauhöhe weiter reduziert werden kann.

Ein ausreichender Abstand von Antriebsstruktur zum Schmelzbereich an der Verbindungsstelle ist notwendig, da der beim Reibschweißvorgang entstehende Temperatureintrag noch zu einem Aufweichen der Antriebsstrukturen führt, wodurch die Übertragung des Antriebsmoments verschlechtert wird.

Gemäß einer weiteren vorteilhaften Ausgestaltung ist der Kopf des Verbindungselements derart ausgestaltet, dass dieser in seinem Randbereich in einem Winkel von 85-95°, insbesondere 90°, gegenüber der Schraubenachse ausläuft.

Gemäß dieser Ausgestaltung, bei der insbesondere das Niveau an der Kopfunterseite ebenfalls im Randbereich liegt, ergibt sich eine maximale Rückhaltekraft, da zum einen ein Maximalabstand zwischen Schweißwulst und Kopfunterseite gegeben ist und zum anderen aufgrund der annähernd orthogonalen Lage der Kopffläche ein besonders guter Formschluss.

In einer weiteren vorteilhaften Ausgestaltung nimmt der Durchmesser mit einer Funktion zu, die in Richtung des Kopfes eine erste Steigung und eine zweite nachfolgende Steigung gegenüber der Normalen zur Schraubenachse aufweist, wobei die zweite Steigung geringer als die erste Steigung ist.

Entsprechend dieser Ausgestaltung ergibt sich ein Verlauf, der einer konkaven Kontur wenigstens angenähert ist. Dies hat zur Folge, dass sich ein besonders vorteilhafter Hinterschnitt zwischen dem sich aus dem aufsteigenden Material ergebendem Schweißwulst und dem Kopf ergibt, der nach Abschluss des Reibschweißvorgangs mit erweichtem Material der Decklage ausgefüllt ist.

Die Annäherung an diese konkave Kontur kann weiter verbessert werden, indem ein dem zweiten Bereich nachfolgender dritter Bereich mit einer dritten Steigung vorgesehen ist, die geringer als der Bereich der zweiten Steigung ist.

Idealerweise liegt ein konkaver Verlauf in Form einer elliptischen oder kreisartigen Kontur vor.

Der Krümmungsradius kann vorzugsweise größer sein als der Abstand der Kopfunterseite zum Anstiegsniveau.

Dadurch ist ein besonders weicher Übergang gewährleistet, was zu einer idealen Verdrängungssteuerung des erweichten Materials der Decklage heraus aus dem Bereich zwischen Kopf und Decklage führt.

In einer weiteren vorteilhaften Ausgestaltung kann vorgesehen sein, dass der Schaft am stirnseitigen Ende vom zylindrischen Schaftteil in einen konischen Bereich übergeht. Dadurch wird eine Verbesserung der Zentrierungseigenschaften des Verbindungselements erreicht. Insbesondere beträgt der volle Kegelwinkel zwischen 60° und 80°.

Gemäß einer weiteren Fortbildung der Erfindung kann sich an den konischen Abschnitt ein weiterer zylindrischer Abschnitt anschließen, was zur Verbesserung der Zentriereigenschaft führt, da der zylindrische Teil besonders gut in die Decklage eingebracht werden kann.

Vorteilhafter Weise kann ein Setzwerkzeug zur Herstellung einer Bauteilverbindung, wie zuvor beschrieben, verwendet werden. Das Setzwerkzeug weist einen Niederhalter und einen Antriebsbit auf. Der Antriebsbit weist an seiner planen Grundfläche eine erhabene Antriebsstruktur auf. Diese ist korrespondierend zu einem Innen-Antrieb am Verbindungselement ausgebildet. Erfindungsgemäß ist die plane Fläche von einer erhabenen Umrandung begrenzt. Diese Umrandung weist einen Innendurchmesser auf.

Durch das Vorsehen einer Umrandung wird erweichtes Material, das während des Reibschweißvorgangs seitlich aus dem Kopf heraus verdrängt wird, derart gelenkt, dass dieses nicht zwischen den Antriebsbit und den den Antriebsbit umgreifenden Niederhalter gelangt. Entsprechend führt die Leitung des erweichten Materials der Decklage zu einer Anhäufung des verdrängten Materials innerhalb des Innendurchmessers, wodurch sich das Material derart aufbaut, dass dieses den Kopf seitlich wenigstens teilweise einschließt. Dies führt zu einer Verbesserung der Scherfestigkeit.

Durch diese Gestaltung ist es möglich, eine geringe Aufbauhöhe zu erreichen und dennoch eine hohe Festigkeit zu bewahren, da das erweichte Material, welches unter dem Kopf heraus verdrängt wird, dennoch zur Erhöhung der Festigung der Verbindung genutzt wird.

In einer weiteren vorteilhaften Ausgestaltung kann der Niederhalter an seiner Stirnseite eine Entformungsschräge aufweisen. Durch das Vorsehen einer Entformungsschräge an der Innenkante wird ein Verklemmen des abgekühlten erweichten Materials mit dem Niederhalter vermieden, wodurch der Ablösevorgang des Niederhalters von der Decklage zuverlässig mit geringem Widerstand stattfindet.

Ferner können in die Grundfläche wenigstens zwei Ansaugbohrungen eingebracht sein. Durch die Ansaugbohrungen kann ein Unterdruck zwischen dem Kopf des eingesetzten Verbindungselements und der Grundfläche hergestellt werden, wodurch das Element an die Grundfläche angesaugt wird und die Antriebsstruktur in den Innen-Antrieb des Verbindungselements eingreift.

Die Ansaugbohrungen sind insbesondere außermittig angeordnet und von der Umrandung wenigstens 5%, insbesondere wenigstens 10%, insbesondere wenigstens 15%, insbesondere wenigstens 17% des Innendurchmessers beabstandet. Dies hat zur Folge, dass ein eingesetztes Verbindungselement, das einen Kopfdurchmesser von 60% bis 90% des Innendurchmessers der Umrandung aufweist, noch in Randnähe des Kopfes angesaugt werden kann. Dadurch wird ein Saugangriff an einer möglichst kühlen Position des Verbindungselements realisiert, um das Eindringen von erweichtem Material des Verbindungselements in die Ansaugbohrung zu vermeiden.

Bei Verwendung eines Kopfes, der einen wesentlich geringeren Durchmesser als der Innendurchmesser der Umrandung ist, hat dies zur Folge, dass Material der Decklage, das beim Fügevorgang aus dem Zwischenbereich verdrängt wird, in einem Bereich seitlich des Kopfes aufgenommen werden kann. Dadurch wird zusätzliches Aufnahmevolumen bereitgestellt, damit die Aufbauhöhe bei möglichst geringem Durchmesser der Verbindungsstelle minimiert werden kann.

Die Ansaugbohrungen tangieren vorzugsweise einen Umkreis, der einen Abstand zur Umrandung von wenigstens 5 % des Innendurchmessers der Umrandung aufweisen. Der Umkreis kann konzentrisch zur Umrandung liegen und einen Durchmesser von 60% bis 90%, insbesondere 60% bis 80% des Innendurchmessers aufweisen.

Ferner betrifft die Erfindung ein Verbindungssystem umfassend ein zuvor beschriebenes Setzwerkzeug und ein zuvor beschriebenes Verbindungselement. Erfindungsgemäß sind das Setzwerkzeug und das Verbindungselement derart aufeinander abgestimmt, dass der Umrandungsinnendurchmesser wenigstens 10% größer als der Kopfdurchmesser des Verbindungselements ist.

Gemäß einer weiteren vorteilhaften Ausgestaltung kann die Höhe der Umrandung größer als die maximale Kopfausdehnung in axialer Richtung sein. In jedem Fall erstreckt sich die Höhe der Umrandung über das Kopfunterseitenniveau des Verbindungselements.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine Seitenansicht eines erfindungsgemäßen Verbindungselements;
- Fig. 1b: eine perspektivische Ansicht eines erfindungsgemäßen Verbindungselements;
- Fig. 1c: eine Teilschnittansicht des Verbindungselements;
- Fig. 2: eine perspektivische Ansicht eines erfindungsgemäßen Verbindungselements;
- Fig. 3: eine schematische Schnittansicht eines erfindungsgemäßen Setzwerkzeugs;
- Fig. 4a: das stirnseitige Ende des Antriebsbits gem. Fig. 3 in perspektivischer Ansicht;
- Fig. 4b: eine Draufsicht auf die Stirnseite des Antriebsbit gemäß Fig. 4a;
- Fig. 5: eine Teilschnittansicht eines Antriebsbit mit eingesetztem Verbindungselement;
- Fig. 6: eine Schnittansicht hergestellten Bauteilverbindung am Ende des Setzvorgangs;
- Fig. 6a: eine ausschnittsweise Vergrößerung der Darstellung von Fig. 6, und
- Fig. 7: eine ausschnittsweise Vergrößerung ähnlich Fig. 6a.

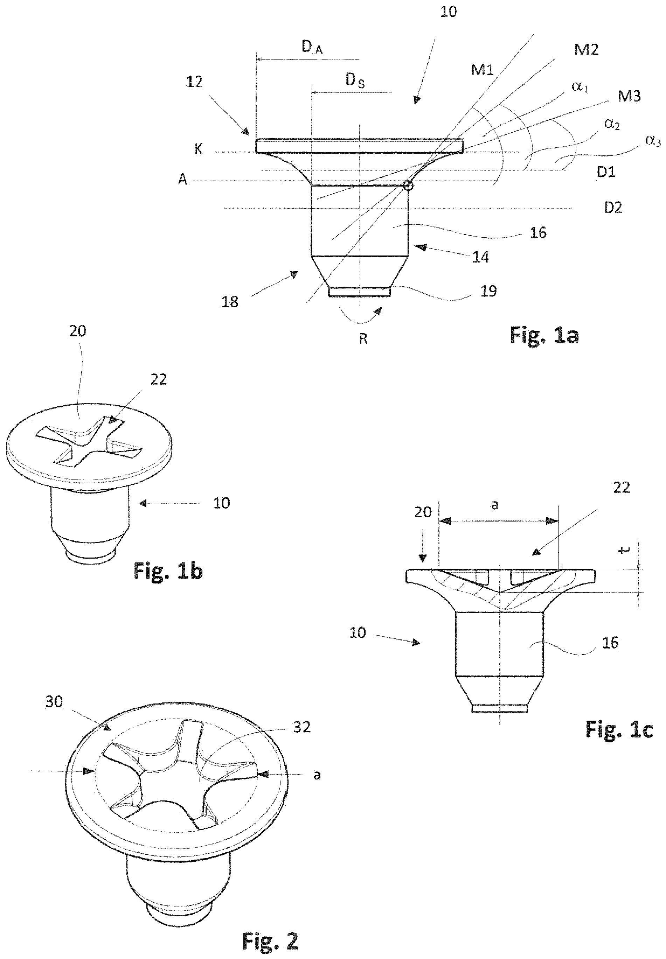

Fig. 1a zeigt eine Seitenansicht eines erfindungsgemäßen Verbindungselements 10. Das Verbindungselement 10 umfasst einen Kopf 12 und einen Schaft 14, wobei der Schaft 14 einen zylindrischen Bereich 16 aufweist. Am zylindrischen Bereich 16 beginnt ab einem Anstiegsniveau A eine kontinuierliche Verdickung des Schaftes bis hin zur Unterseite des Kopfes an einem Kopfniveau K. Das Kopfniveau K ist das Niveau mit dem größten Abstand zum Schaftende. Dies ist für das vorliegende Verbindungselement 10 für den Rand des Kopfes der Fall.

Die kontinuierliche Durchmesserzunahme erfolgt entlang einer Krümmung mit einem Krümmungsradius R. Die Zunahme des Durchmessers beginnt an einem Anstiegsniveau A, das in einem Bereich von D1 = (D_{A} - D_{S}) / 4 bis D2 = (D_{A} - D_{S}) / 2 im Abstand zum Kopfunterseitenniveau K liegt. Diese Ausgestaltung ergibt ein Verdrängungsverhalten bei einem dünnen Deckblech, wie es in Fig. 2 näher beschrieben ist.

Ferner weist das Verbindungselement 10 an seinem dem Kopf abgewandten Ende einen konischen Bereich 18 auf. Durch den Konus 18 wird die Stirnfläche des Schaftes reduziert. Dies sorgt für eine bessere Zentrierung des Verbindungselements während des Einbringvorgangs. Das dargestellte Verbindungselement 10 weist im Anschluss an den Konus zudem einen zylindrischen Fortsatz auf, der leicht in eine Decklage eindringt und die Zentrierung des Verbindungselements 10 weiter verbessert.

Der Durchmesser nimmt in dieser Ausgestaltung mit einer kontinuierlichen Steigungsabnahme gegenüber der Normalen N zur Schraubenachse zu, wobei dieser auch eine erste Steigung M1 (α₁)und eine nachfolgende zweite Steigung M2 (α₂) umfasst.

Fig. 1b zeigt eine perspektivische Ansicht eines erfindungsgemäßen Verbindungselements 10, in dessen flache Kopffläche 20 ein Innenantrieb 22, der in Form eines Kreuzschlitz-Antriebs ausgebildet ist, eingebracht ist.

Fig. 1c zeigt eine Teilschnittansicht des Verbindungselements 10, wobei hier zu erkennen ist, dass die Antriebstiefe t nur höchstens 30% der maximalen Ausdehnung a des Antriebs in radialer Richtung entspricht. Eine solche Gestaltung ist möglich, weil die für die Reibschweißverbindung notwendigen Axialkräfte über den flachen Kopf 20 übertragen werden. Da für den Innenantrieb aufgrund der beim Reibschweißvorgang entstehenden Wärme ein gewisser Abstand zum Schaft 16 eingehalten werden muss, erlaubt die geringe Antriebstiefe t eine geringe axiale Ausdehnung des Kopfes und damit eine geringe Aufbauhöhe.

Fig. 2 zeigt eine perspektivische Ansicht eines erfindungsgemäßen Verbindungselements 30, welches im Gegensatz zu dem in Fig. 1b gezeigten Verbindungselement eine fünf-strahlige Antriebsausnehmung 32 aufweist. Dadurch wird die Übertragung des Drehmoments bei hohem Temperatureintrag verbessert. In einer gestrichelten Linie ist der Umkreis der Antriebsstruktur und seine maximale Ausdehnung a in radialer Richtung dargestellt.

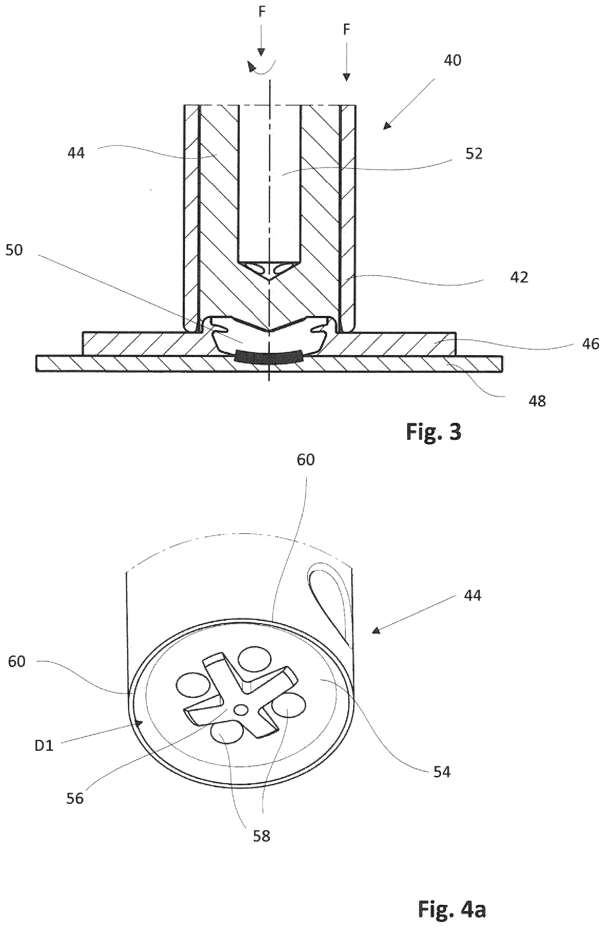

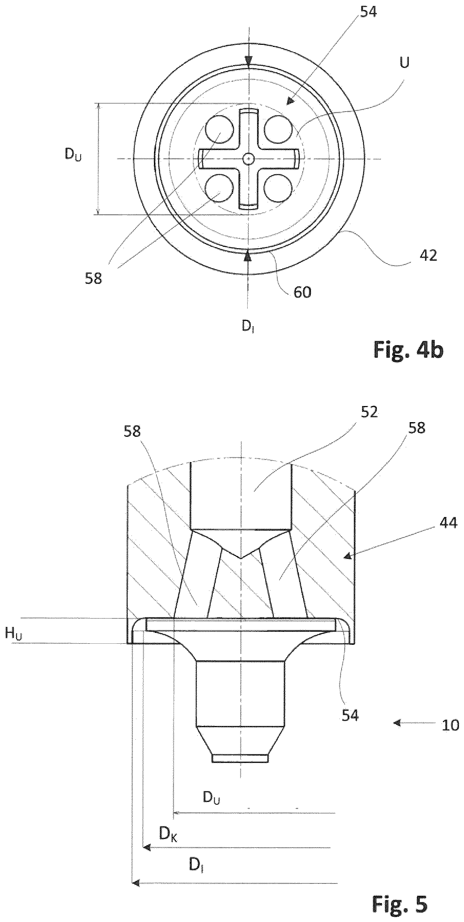

Fig. 3 zeigt eine schematische Schnittansicht eines erfindungsgemäßen Setzwerkzeugs 40. Das Setzwerkzeug 40 umfasst einen Niederhalter 42 und einen Antriebsbit 44. Mit dem Niederhalter 42 werden die zu verbindenden Bauteillagen 46, 48 während des Verbindungsvorgangs zusammengedrückt. Der Antriebsbit 44 ist drehbar gegenüber dem Niederhalter 42 gelagert und bringt das Verbindungselement 50 unter Druck und Rotation in die Bauteillagen 46, 48 ein. Die obere Decklage 46 ist vorzugsweise aus Leichtmetall, insbesondere Aluminium gebildet, wobei die Basislage 48 aus hochfestem Stahl besteht. Der Antriebsbit 44 weist einen zentralen Saugkanal 52 auf, über welchem ein Unterdruck an der Anlagefläche erzeugt werden kann, wodurch das Verbindungselement 50 am Antriebsbit 44 während des Verbindungsvorgangs festgehalten werden kann. Die Gestaltung des stirnseitigen Endes des Antriebsbits 44 wird in den folgenden Figuren 4a, 4b näher erläutert.

Fig. 4a zeigt das stirnseitige Ende des Antriebsbits 44 in perspektivischer Ansicht. Der Antriebsbit 44 weist eine plane Grundfläche 54 auf. Die plane Grundfläche 54 trägt erhabene Antriebsstrukturen 56 um einen korrespondierendes Verbindungselement mit einem Innenantrieb anzutreiben, wobei die Axialkraft auf das Verbindungselement über die plane Grundfläche übertragen wird. Zwischen den Antriebsstrukturen 56 sind Ansaugbohrungen 58 vorgesehen, die kommunizierend mit dem zentralen Saugkanal verbunden sind. Die plane Grundfläche 54 ist von einer gegenüber der planen Grundfläche 54 erhabenen Umrandung 60 umgeben.

Fig. 4b zeigt eine Draufsicht auf die Stirnseite des Antriebsbit 44. Die Ansaugbohrungen 58 tangieren einen Umkreis U. Die Umrandung 60 weist einen Innendurchmesser D_{I} auf. Die Umrandung und der Umkreis U liegen konzentrisch, wobei der Durchmesser Du des Umkreises U etwa 65% des Innendurchmessers D_{I} der Umrandung beträgt. Dadurch wird ermöglicht, dass auch Verbindungselemente, die einen wesentlich geringeren Kopfdurchmesser besitzen als der Innendurchmesser D_{I} der Umrandung noch im Randbereich angesaugt werden können. Die Ansaugpunkte am Verbindungselement befinden sich dann möglichst beabstandet zur Mitte des Verbindungselements.

Fig. 5 zeigt eine Teilschnittansicht eines Antriebsbit 44 mit eingesetztem Verbindungselement 10. Der Antriebsbit 44 weist einen zentralen Saugkanal 52 auf, in welchen die Ansaugbohrungen 58 einmünden. Das eingesetzte Verbindungselement weist einen Kopfdurchmesser D_{K} auf der etwa 90% D_{I} ist. In dieser Ansicht ist besonders gut die Höhe H_{U} der erhabenen Umrandung 60 zu erkennen. Diese erstreckt sich über das Kopfunterseitenniveau K des Verbindungselements hinaus. Dadurch wird gewährleistet, dass Material, das beim Setzvorgang radial nach außen verdrängt wird, vom Antriebsbit aufgenommen und so gelenkt wird, dass dieses nicht zwischen den das Antriebswerkzeug umgreifenden Niederhalter (nicht gezeigt) und den Antriebsbit gelangen kann. In dem Bereich zwischen dem Kopfniveau K und der planen Grundfläche 54 kann Material der Decklage aufgenommen werden, wodurch die Aufbauhöhe bei reduziertem Durchmesser bereitgestellt werden kann.

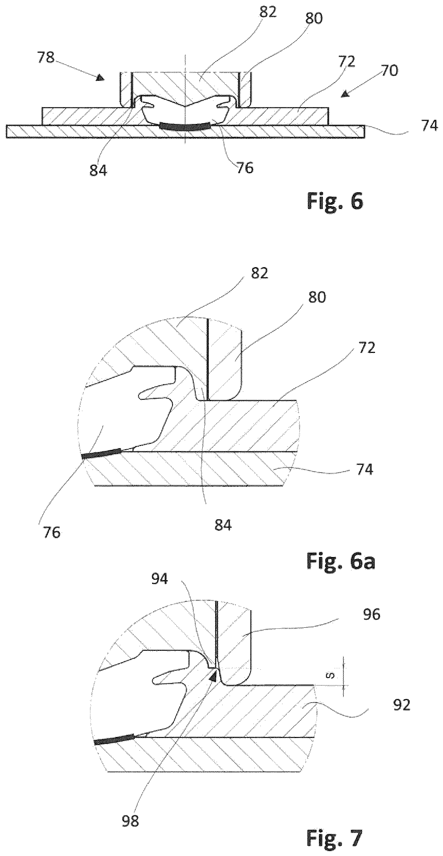

Fig. 6 zeigt eine Schnittansicht am Ende des Setzvorgangs bei hergestellter Bauteilverbindung 70. Die Bauteilverbindung 70 umfasst eine Decklage 72 und eine Basislage 74, die über ein Verbindungselement 76 verbunden sind. Das Verbindungselement 76 geht mit der Basislage eine stoffschlüssige Schweißverbindung ein, wohingegen die Decklage 72 formschlüssig am Verbindungselement 76 gehalten ist. Ferner ist ein Setzwerkzeug 78 angedeutet, das einen Niederhalter 80 umfasst, der auf den Bauteilverbund drückt und Decklage 72 und Basislage 74 klemmt. Der Antriebsbit 82 besitzt eine Umrandung 84, die eine Höhe aufweist, dass bei Ende des Setzvorgangs die Umrandung auf dem Niveau der Decklage 72 und somit bündig mit dem Niederhalter 80 zu liegen kommt.

Fig. 6a zeigt eine ausschnittsweise Vergrößerung der Darstellung von Fig. 6. Besonders gut an dieser Darstellung ist erkennbar, dass erweichtes und verdrängtes Material der Decklage 72 zwischen dem Kopf und dem während des Reibschweißvorgangs mit der Basislage 74 aufsteigenden Materials des Verbindungselements 76 aufgenommen ist. Da der Niederhalter 80 und die Umrandung 84 am Ende des Prozesses auf dem gleichen Niveau zu liegen kommen, ist nur eine geringfügige Entformungsschräge am Niederhalter 80 notwendig, da das Material der Decklage 72 vorrangig innerhalb der Umrandung 84 gehalten wird, und der Niederhalter 80 selbst nicht vorrangig als Form dient.

Fig. 7 zeigt eine ausschnittsweise Vergrößerung einer Darstellung ähnlich Fig. 6, wobei bei der Gestaltung gemäß Fig. 7 die Umrandung 94 derart gewählt ist, dass diese bei Ende des Setzvorgangs zum Niveau der Decklage 92 im Abstand S beabstandet ist. Dadurch wird das während des Reibschweißvorgangs verdrängte Material der Decklage 92 derart von der Umrandung 94 umgelenkt, dass dieses nicht zwischen Antriebsbit und Niederhalter 96 gelangt, und dennoch das verdrängte Material der Decklage 92 in dieser Ausgestaltung auch vom Niederhalter 96 begrenzt werden kann. Da der Niederhalter 96 regelmäßig ein maximales Baumaß vorgibt, kann auf diese Weise zusätzliches Aufnahmevolumen geschaffen werden, wodurch die Bauhöhe bei gleichbleibenden Außenabmessungen weiter reduziert werden kann. Der Niederhalter 96 ist in dieser Ausführungsform mit einer Entformungsschräge entlang seiner Innenkante versehen. Dadurch wird ein einfacheres Ablösen des Niederhalters 96 im Anschluss an den Setzvorgang gewährleistet, da ein Verklemmen des Niederhalters 96 mit dem umgeformten Material der Decklage 92 vermieden wird.

## Patentansprüche

1. Bauteilverbindung (70) umfassend eine Basislage (74) und wenigstens eine Decklage (72, 92, 46) und ein Verbindungselement (76) umfassend einen Kopf (12) und einen Schaft (16), das mit der Basislage (48, 74) an seiner Stirnseite eine stoffschlüssige Verbindung eingeht wobei das Verbindungselement (10, 20, 30, 50) zur Herstellung der Bauteilverbindung (70), das mit der Basislage (74) durch Reibung verschweißt wird, einen Schaft (16) mit einem Schaftabschnitt (14) und einem Kopf (12) mit einer an der Kopfoberseite liegenden Planfläche (20) zur Übertragung einer Axialkraft aufweist,
**dadurch gekennzeichnet, dass** das Material der Decklage (72, 92, 46) über dem Niveau der Decklage (72, 92, 46) den Kopf (12) seitlich wenigstens teilweise umschließt, wobei in die Planfläche (20) eine Antriebsausnehmung (22, 32) eingebracht ist, um ein Drehmoment zu übertragen, wobei sich eine kontinuierliche Durchmesserzunahme beginnend an einem Anstiegsniveau (A) am Schaftabschnitt (16) bis zur Kopfunterseite ergibt, wobei der Abstand des Anstiegsniveaus (A) bis zu einem Kopfunterseitenniveau (K), das den größten Abstand vom Schaftende aufweist, kleiner als die Hälfte der Differenz zwischen Kopfaußendurchmesser und Schaftdurchmesser am Anstiegsniveau (D_{A} - Ds) / 2 (D2) und größer als ein Viertel der Differenz zwischen Kopfaußendurchmesser und Schaftdurchmesser am Anstiegsniveau (D_{A}-D_{S}) / 4 (D1) ist.

2. Bauteilverbindung nach Anspruch 1, **dadurch gekennzeichnet, dass** die Steigung (M1) am Anstiegsniveau (A) einen Winkel (α₁) von weniger als 80° mit der Normalen einschließt.

3. Bauteilverbindung nach einem der vorangehenden Ansprüche, **dadurch gekennzeichnet, dass** der erste Schaftabschnitt (14) des Verbindungselements zylindrisch ist.

4. Bauteilverbindung nach einem der vorangehenden Ansprüche, **dadurch gekennzeichnet, dass** die Tiefe (t) der Antriebsausnehmung (22, 32) des Verbindungselementes kleiner als 30% der radialen Ausdehnung (a) der Antriebsausnehmung (22, 32) ist.

5. Bauteilverbindung nach einem der vorangehenden Ansprüche, **dadurch gekennzeichnet, dass** der Kopf (12) des Verbindungselements in seinem Randbereich in einem Winkel von 85° bis 95°, insbesondere 90°, gegenüber der Rotationsachse des Verbindungselements (10, 30) ausläuft.

6. Bauteilverbindung nach einem der vorangehenden Ansprüche, **dadurch gekennzeichnet, dass** der Durchmesser des Verbindungselements mit einer Funktion zunimmt, die in Axialrichtung in Richtung des Kopfes eine erste Steigung (M1, α₁) und eine zweite Steigung (M2, α₂) gegenüber der Normalen zur Rotationsachse (R) aufweist, wobei die zweite Steigung (M2, α₂) geringer ist als die erste Steigung (M1, α₁).

7. Bauteilverbindung nach Anspruch 6, **dadurch gekennzeichnet, dass** der Durchmesser des Verbindungselements mit einer Funktion zunimmt, die in Axialrichtung in Richtung des Kopfes (12) eine erste Steigung (M1, α₁) und eine zweite Steigung (M2, α₂) und eine dritte Steigung (M3, α₃) gegenüber der Normalen zur Rotationsachse (R) aufweist, wobei die zweite Steigung (M2, α₂) geringer ist als die erste Steigung und die dritte Steigung (M3, α₃) geringer als die zweite Steigung (M2, α₂) ist.

8. Bauteilverbindung nach Anspruch 7, **dadurch gekennzeichnet, dass** die Zunahme des Durchmessers des Verbindungselements entlang einer Krümmung erfolgt, deren Radius insbesondere größer als der Abstand des Punktes von der Kopfunterseite ist.

## Claims

1. Component connection (70) comprising a base layer (74) and at least one cover layer (72, 92, 46) and a connecting element (76) comprising a head (12) and a shaft (16), with a material bond being formed between the end face of the connecting element and the base layer (48, 74), **characterized in that** material from the cover layer (72, 92, 46) laterally surrounds at least part of the head (12) above the level of the cover layer (72, 92, 46),
wherein the connecting element (10, 20, 30, 50) for producing the component connection (70), which is adapted to be friction-welded to the base layer (74), has a shaft (16) with a shaft portion (14) and a head (12) with a flat surface (20) located on the top side of the head for transmitting an axial force,
wherein a drive recess (22, 32) is made in the flat surface (20) for transmitting a torque, wherein the diameter increases continuously from a rise level (A) on the shaft portion (16) to the underside of the head,
wherein the distance between the rise level (A) and a level (K) at the underside of the head which latter level is located furthest away from the end of the shaft, is less than half the difference between the outer diameter of the head and the shaft diameter at the rise level (D_{A} - Ds) / 2 (D2) and more than a quarter of the difference between the outer diameter of the head and the shaft diameter at the rise level (D_{A} - Ds) / 4 (D1).

2. Component connection according to claim 1, **characterized in that** at the rise level (A), the gradient (M1) forms an angle (α₁) of less than 80° with the normal.

3. Component connection according to any one of the preceding claims, **characterized in that** the first shaft portion (14) of the connecting element is cylindrical.

4. Component connection according to any one of the preceding claims, **characterized in that** the depth (t) of the drive recess (22, 32) of the connecting element is less than 30% of the radial extent (a) of the drive recess (22, 32).

5. Component connection according to any one of the preceding claims, **characterized in that** in the region of its edge, the head (12) of the connecting element terminates at an angle of between 85° and 95°, in particular 90°, relative to the axis of rotation of the connecting element (10, 30).

6. Component connection according to any one of the preceding claims, **characterized in that** the diameter of the connecting element increases according to a function which, in the axial direction in the direction of the head, has a first gradient (M1, α₁) and a second gradient (M2, α₂) with respect to the normal relative to the axis of rotation (R), which second gradient (M2, α₂) is lower than the first gradient (M1, α₁).

7. Component connection according to claim 6, **characterized in that** the diameter of the connecting element increases according to a function which, in the axial direction in the direction of the head, has a first gradient (M1, α₁) and a second gradient (M2, α₂) and a third gradient (M3, α₃) with respect to the normal relative to the axis of rotation (R), which second gradient (M2, α₂) is lower than the first gradient, and which third gradient (M3, α₃) is lower than the second gradient (M2, α₂).

8. Component connection according to claim 7, **characterized in that** the diameter of the connecting element increases along a curve having a radius that is in particular greater than the distance of the point from the underside of the head.

## Revendications

1. Liaison de pièces (70) comprenant une couche de base (74) et au moins une couche de recouvrement (72, 92, 46) et un élément de liaison (76) comprenant une tête (12) et une tige (16), qui engendre une liaison de matière sur sa face frontale avec la couche de base (48, 74),
**caractérisée en ce que** le matériau de la couche de recouvrement (72, 92, 46) entoure latéralement au moins en partie la tête (12) au-dessus du niveau de la couche de recouvrement (72, 92, 46),
dans laquelle
l'élément de liaison (10, 20, 30, 50) destiné à établir la liaison de pièces (70), qui est soudé par friction à la couche de base (74), présente une tige (16) avec une section de tige (14) et une tête (12) avec une surface plane (20) située sur le côté supérieur de tête pour la transmission d'une force axiale,
dans laquelle un évidement d'entraînement (22, 32) est ménagé dans la surface plane (20), afin de transmettre un couple, dans laquelle une augmentation de diamètre continue commençant à un niveau de montée (A) sur la section de tige (16) jusqu'au côté inférieur de tête est obtenue, dans laquelle l'écart du niveau de montée (A) jusqu'à un niveau de côté inférieur de tête (K), qui présente le plus grand écart par rapport à l'extrémité de tige, est inférieur à la moitié de la différence entre le diamètre extérieur de tête et le diamètre de tige au niveau de montée (D_{A} - D_{S}) / 2 (D2) et supérieur à un quart de la différence entre le diamètre extérieur de tête et le diamètre de tige au niveau de montée (D_{A} - D_{S}) / 4 (D1).

2. Liaison de pièces selon la revendication 1, **caractérisée en ce que** la pente (M1) au niveau de montée (A) forme un angle (α₁) de moins de 80° avec la normale.

3. Liaison de pièces selon l'une quelconque des revendications précédentes, **caractérisée en ce que** la première section de tige (14) de l'élément de liaison est cylindrique.

4. Liaison de pièces selon l'une quelconque des revendications précédentes, **caractérisée en ce que** la profondeur (t) de l'évidement d'entraînement (22, 32) de l'élément de liaison est inférieure à 30 % de l'étendue radiale (a) de l'évidement d'entraînement (22, 32).

5. Liaison de pièces selon l'une quelconque des revendications précédentes, **caractérisée en ce que** la tête (12) de l'élément de liaison s'élargit dans sa zone de bord selon un angle de 85° à 95°, en particulier de 90°, par rapport à l'axe de rotation de l'élément de liaison (10, 30).

6. Liaison de pièces selon l'une quelconque des revendications précédentes, **caractérisée en ce que** le diamètre de l'élément de liaison augmente avec une fonction qui présente dans la direction axiale en direction de la tête une première pente (M1, α₁) et une deuxième pente (M2, α₂) par rapport à la normale à l'axe de rotation (R), dans laquelle la deuxième pente (M2, α₂) est plus petite que la première pente (M1, α₁).

7. Liaison de pièces selon la revendication 6, **caractérisée en ce que** le diamètre de l'élément de liaison augmente avec une fonction qui présente dans la direction axiale en direction de la tête (12) une première pente (M1, α₁) et une deuxième pente (M2, α₂) et une troisième pente (M3, α₃) par rapport à la normale à l'axe de rotation (R), dans laquelle la deuxième pente (M2, α₂) est plus petite que la première pente et la troisième pente (M3, α₃) est plus petite que la deuxième pente (M2, α₂).

8. Liaison de pièces selon la revendication 7, **caractérisée en ce que** l'augmentation du diamètre de l'élément de liaison s'effectue le long d'une courbure dont le rayon est en particulier supérieur à l'écart du point par rapport au côté inférieur de tête.
